# EUROPÄISCHE PATENTSCHRIFT

(11) **EP 0 537 133 B1**
(45) Veröffentlichungstag und Bekanntmachung des Hinweises auf die Patenterteilung: **20.08.1997**
(21) Anmeldenummer: 92890208.9
(22) Anmeldetag: 30.09.1992
(51) Int. Cl.: C22B 11/00

(54) **Verfahren zur Gewinnung von Platin hoher Reinheit**
Process for the preparation of platinum of high purity
Procédé de préparation de platine de haute pureté

(30) Priorität: 30.09.1991 AT 1963/91
(43) Veröffentlichungstag der Anmeldung: 14.04.1993
(73) Patentinhaber: Prior Technologie Gesellschaft m.b.H., 6840 Götzis (AT)
(72) Erfinder: Prior, Adalbert, Dr., 6840 Götzis (AT)
(74) Vertreter: Collin, Hans, Dipl.-Ing. Dr.

(56) Entgegenhaltungen:
- WO-A-92/15526
- PATENT ABSTRACTS OF JAPAN vol. 5, no. 41 (C-47)18. März 1981 & JP-A-55 164 042 (AGENCY OF IND SCIENCE & TECHNOL) 20 Dezember 1980

## Beschreibung

Die Erfindung betrifft ein Verfahren zur Gewinnung von Platin hoher Reinheit.

Üblicherweise erfolgt die Raffination und Gewinnung von Platin auf chemischem Wege. In der Regel wird nach entsprechenden Vorbehandlungen das Platin als Hexachloroplatinat, entweder als Ammonium-, Natrium- oder Kaliumsalz gefällt. Diese Salze haben nur eine geringe Löslichkeit und werden nach Abfiltrieren gewaschen und chemisch oder thermisch zu Metall zersetzt. Durch Wiederholung dieses Vorganges, d.h. Auflösen des Metalles, neuerliches Fällen des Platins, Reduktion zum Metall wird das Platin gereinigt, bzw. raffiniert.

Eine Alternative zu diesem aufwendigen Verfahren ist ein Verfahren, bei dem ausgehend von rohen, durch andere Platingruppenmetalle und/oder und Metalle verunreinigten Halogenkomplexen des Platins durch die Umwandlung eines im wässerigen Medium begrenzt löslichen Halogenkomplexes des Platins durch chemische Reaktion in einen anderen Halogenkomplex unter gleichzeitigem Neuaufbau der kristallinen Struktur ein signifikanter Reinigungseffekt erreicht wird, so daß aus einem Rohsalz mit einem Reinheitsgrad von ca. 98 - 99 % ein solches von 99,95 % oder besser erzielt wird.

Die erfindungsgemäße Modifikation dieses Verfahrens zeichnet sich dadurch aus, daß durch Zusatz eines Reduktionsmittels, wie z.B. Ascorbinsäure oder Hydrazinsulfat, die Umkristallisation beschleunigt und die Ausbeute wesentlich gesteigert wird. Dies gilt insbesondere für Rohsalze, die besonders stark verunreinigt sind.

Weitere Ausführungsformen des erfindungsgemäßen Verfahrens sind Gegenstand der Unteransprüche 2 bis 11.

### Beispiel:

Ausgangsmaterial ist eine Salzsäurelösung folgender Zusammensetzung:

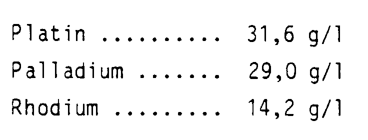

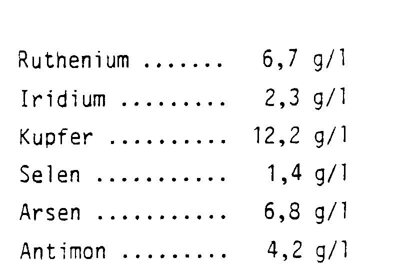

Daneben sind noch folgende Elemente in der Lösung in sehr geringer Konzentration enthalten:

Silber, Osmium, Fe, Ni, Cobalt, Tellur, Blei, Calcium, Se, Zink, Chrom, Silicium, Bis, Bor. Der Säuregehalt beträgt ca. 4,2 m-Salzsäure.

Es werden 50 ml dieser Lösung entnommen und mit destilliertem Wasser 1:1,5 verdünnt. Mit 4-m-Ammoniumchloridlösung wird auf bekanntem Wege das Hexachloroplatinat als Ammoniumsalz gefällt. Das Salz wird abfiltriert und mit leichtammoniakalischer 0,5-m-Ammoniumchloridlösung gewaschen.

Von den ca. 7 g erhaltenen Salzes werden jeweils 3 g wie folgt behandelt:

### Versuch 1 (Vergleich):

3 g des Ammoniumhexachloroplatinatsalzes werden mit 10 ml destilliertem Wasser aufgeschwemmt und mit 10 ml konzentrierter HBr versetzt. Unter Rühren wird die Suspension auf 90° erhitzt und ca. 45 min weitergerührt. Dabei erfolgt die Umwandlung ins rote Ammoniumhexabromoplatinat.

### Versuch 2 (erfindungsgemäß):

3 g Ammoniumhexachloroplatinat werden mit 10 ml destilliertem Wasser aufgeschwemmt und mit 10 ml konzentrierter HBr versetzt, sowie 1 ml einer 5 %igen Ascorbinsäurelösung zugegeben, unter Rühren bei 45°C gehalten. Nach ca. 30 min ist aus dem ursprünglichen braun-gelben Salz ein roter kristalliner Niederschlag entstanden.

Nach Abkühlen werden die Suspensionen filtriert.

Bei Versuch 1 wurden 3,15 g eines rötlich-ockerbraunen Salzes ausgewogen. Dies entspricht bezogen auf das Ammoniumhexabromoplatinat einer Umsetzungsrate von ca. 65,6 %.

Im Versuch 2 wurden 4,42 g eines roten Salzes ausgewogen. Bezogen auf das Ammoniumhexabromoplatinat ergibt sich eine Umsetzungsrate, die bei ca. 92 % liegt.

Die Reduktion zum Metall ergab in beiden Fällen den theoretischen Wert, d.h. die vollständige Umkristallisation bzw. Reinheit ist bestätigt.

## Patentansprüche

1. Verfahren zur Gewinnung von Platin hoher Reinheit, bei dem eine relativ schwerlösliche Halogenverbindung des Platins, in der Regel die Ammonium- bzw. Kaliumsalze, durch chemische Umwandlung in wässeriger Suspension in eine von der Ausgangsverbindung verschiedene Halogenverbindung übergeführt und anschließend chemisch oder thermisch unter Erhalt von Platinmetall zersetzt wird, dadurch gekennzeichnet, daß die Umwandlung in Gegenwart eines Reduktionsmittels, z.B. Ascorbinsäure oder Hydrazinsulfat, durchgeführt wird.

2. Verfahren nach Anspruch 1, dadurch gekennzeichnet, daß
(NH₄)₂ PtCl₆ in (NH₄)₂ PtBr₆
übergeführt wird.

3. Verfahren nach Anspruch 1, dadurch gekennzeichnet, daß
(NH₄)₂ PtBr₆ in (NH₄)₂ PtCl₆
übergeführt wird.

4. Verfahren nach Anspruch 1, dadurch gekennzeichnet, daß die Umwandlung unter Änderung der Oxidationszahl des Zentralatoms erzielt wird.

5. Verfahren nach einem der Ansprüche 1 bis 4, dadurch gekennzeichnet, daß bei der Umwandlung der Verbindung sowohl Liganden wie Oxidationszahl des Zentralatoms verändert werden.

6. Verfahren nach einem der Ansprüche 1 bis 4, dadurch gekennzeichnet, daß die Umwandlung zwischen 50°C und dem Siedepunkt des wässerigen Reaktionsmediums durchgeführt wird.

7. Verfahren nach einem der Ansprüche 1 bis 6, dadurch gekennzeichnet, daß die Umwandlung in einem Rührreaktor durchgeführt wird.

8. Verfahren nach einem der Ansprüche 1 bis 7, dadurch gekennzeichnet, daß die Umwandlung in einem die Bildung von Idealkristallen besonders begünstigenden dreidimensional wirkenden Mischer durchgeführt wird.

9. Verfahren nach einem der Ansprüche 1 bis 8, dadurch gekennzeichnet, daß vor der Fällung der Roh-Halogenverbindung eventuell anwesende Anteile von Gold oder Silber in der Ausgangslösung durch Bildung und Abfiltration schwerlöslicher Verbindungen oder metallischer Ausfällungen abgetrennt werden.

10. Verfahren nach einem der Ansprüche 1 bis 9, dadurch gekennzeichnet, daß feinste, dem Endprodukt beigemischte Fremdstoffe, wie SiO₂, Ag Cl, Ag Br, Au, durch Abschlämmen, vorzugsweise im Fließbett und mit feinfiltrierter Mutterlauge abgetrennt werden.

11. Verfahren nach einem der Ansprüche 1 bis 10, dadurch gekennzeichnet, daß die bei den Reaktionen der Verbindungen zum Metall freiwerdenden bromidhaltigen Produkte direkt oder nach Umwandlung in Bromwasserstoffsäure oder neutrale Bromide in den Folgechargen wieder eingesetzt werden.

## Claims

1. A process for the production of high-purity platinum, wherein a halogen compound of platinum having relative low solubility, usually the ammonium and potassium salts, respectively, is transformed by chemical conversion in an aqueous suspension into a halogen compound other than the starting compound, subsequently being chemically or thermally decomposed, thus obtaining platinum metal, characterized in that the transformation is effected in the presence of a reducing agent, e.g. ascorbic acid or hydrazine sulfate.

2. The process according to claim 1, characterized in that
(NH₄)₂PtCl₆ is transformed into (NH₄)₂PtBr₆.

3. The process according to claim 1, characterized in that
(NH₄)₂PtBr₆ is transformed into (NH₄)₂PtCl₆.

4. The process according to claim 1, characterized in that the conversion is achieved involving a change of the oxidation number of the central atom.

5. The process according to any of claims 1 to 4, characterized in that ligands as well as oxidation number of the central atom are changed during the conversion of the compound.

6. The process according to any of claims 1 to 4, characterized in that the conversion is carried out between 50°C and the boiling point of the aqueous reaction medium.

7. The process according to any of claims 1 to 6, characterized in that the conversion is carried out in a stirring reactor.

8. The process according to any of claims 1 to 7, characterized in that the conversion is carried out in a mixer with three-dimensional function especially promoting the formation of ideal crystals.

9. The process according to any of claims 1 to 8, characterized in that possibly present gold or silver contents in the starting solution are removed by the formation and filtration of compounds of low solubility or metal precipitates before the precipitation of the raw halogen compound.

10. The process according to any of claims 1 to 9, characterized in that foreign ultra-fine particle matter admixed with the final product, like SiO₂, AgCl, AgBr, Au, is removed by elutriation, preferably in a fluidized bed and with finely filtered mother liquor.

11. The process according to any of claims 1 to 10, characterized in that the bromide containing products liberated during the reactions of the compounds to metal are reutilized in the subsquent batches directly or after conversion into hydrobromic acid.

## Revendications

1. Procédé pour la production de platine de pureté élévée, dans lequel un halide de platine dont la dissolution est relativement difficile, normalement les sels d'ammonium ou de calcium, est transformé en un halide different du composé de départ par transformation chimique en suspension aqueuse et par la suite est décomposé de façon chimique ou thermique, ce qui produit du platine métallique, caractérisé en ce que la transformation est effectuée en présence d'un réducteur, par exemple d'acide ascorbique ou du sulfate d'hydrazinium.

2. Le procédé selon la revendication 1, caractérisé en ce que
(NH₄)₂PtCl₆ est transformé en (NH₄)₂PtBr₆.

3. Le procédé selon la revendication 1, caractérisé en ce que
(NH₄)₂PtBr₆ est transformé en (NH₄)₂PtCl₆.

4. Le procédé selon la revendication 1, caractérisé en ce que la transformation est effectuée en changeant le nombre d'oxydation de l'atome central.

5. Le procédé selon l'une des revendications 1 à 4, caractérisé en ce que les ligands aussi bien que l'atome central sont changés au cours de la transformation du composé.

6. Le procédé selon l'une des revendications 1 à 4, caractérisé en ce que la transformation est effectuée entre 50°C et le point d'ébullition du médium aqueux de la reaction.

7. Le procédé selon l'une des revendications 1 à 6, caractérisé en ce que la transformation est effectuée dans un réacteur agitateur.

8. Le procédé selon l'une des revendications 1 à 7, caractérisé en ce que la transformation est effectuée dans un mélangeur d'activité tridimensionnelle particulièrement favorable à la formation de cristaux idéaux.

9. Le procédé selon l'une des revendications 1 à 8, caractérisé en ce que de parts d'or ou d'argent éventuellement présentes dans la solution de départ avant la précipitation de l'halide brut sont séparées par la formation et la séparation par filtration de composés dont la dissolution est difficile ou de précipitations métalliques.

10. Le procédé selon l'une des revendications 1 à 9, caractérisé en ce que des impuretés très fines ajoutées au produit final, par exemple SiO₂, AgCl, AgBr, Au, sont séparées par débourbage, préférablement en lit fluidisé et avec une eau-mère finement filtrée.

11. Le procédé selon l'une des revendications 1 à 10, caractérisé en ce que les produits bromures naissant pendant la conversion des composés en métal sont reutilisés dans les charges suivantes directement ou après être transformés en acide bromhydrique ou en bromures neutres.
